# EUROPÄISCHE PATENTSCHRIFT

(11) **EP 0 696 224 B1**
(45) Veröffentlichungstag und Bekanntmachung des Hinweises auf die Patenterteilung: **26.03.1997**
(21) Anmeldenummer: 94915068.4
(22) Anmeldetag: 19.04.1994
(51) Int. Cl.: B01D 19/04, D21H 21/12

(54) **WÄSSRIGE ANTISCHAUMMITTELDISPERSIONEN**
AQUEOUS ANTI-FOAMING AGENT DISPERSIONS
DISPERSIONS AQUEUSES ANTI-MOUSSE

(30) Priorität: 28.04.1993 DE 4313947
(43) Veröffentlichungstag der Anmeldung: 14.02.1996
(73) Patentinhaber: Henkel Kommanditgesellschaft auf Aktien, 40191 Düsseldorf (DE)
(72) Erfinder: WOLLENWEBER, Horst-Werner, D-40597 Düsseldorf (DE)
(86) Internationale Anmeldenummer: EP9401208
(87) Internationale Veröffentlichungsnummer: WO9425137

(56) Entgegenhaltungen:
- WO-A-93/00144
- WO-A-93/09861
- DE-A- 2 242 541
- DE-A- 3 705 896

## Beschreibung

Die Erfindung betrifft wäßrige Antischaummitteldispersionen, deren dispergierte Phase Fettalkohole, Ketone sowie gegebenenfalls natürliche und/oder synthetische Wachse mit bestimmten Schmelzpunkten enthält. Diese Antischaummitteldispersionen werden vorzugsweise in der Papierherstellung verwendet.

Für eine Vielzahl technischer Prozesse stellt die mit der Anwesenheit bzw. mit dem Einsatz von grenzflächenaktiven Substanzen verbundene Schaumentwicklung ein ernsthaftes Problem dar. So tritt beispielsweise bei der Herstellung von Farben und Lacken, insbesondere bei Wasserlacken, beim Vermischen der Rezepturbestandteile, das heißt beim Anreiben des Lackes, durch Einrühren von Luft verstärkte Schaumbildung auf. Aufgrund dieser Schaumbildung gestaltet sich die Herstellung von Farben und Lacken langwieriger, da die Anlagen nur mit einem Bruchteil des zur Verfügung stehenden Volumens gefüllt und betrieben werden können. Gleichzeitig kann eine solche Schaumbildung aber auch auftreten, wenn der Anwender Lacke bzw. Farbe auf die Untergründe auftragen will. Dabei können Luftbläschen entstehen, die nicht nur optische Oberflächenstörungen darstellen, sondern auch Schwachstellen des getrockneten Films, da die Bläschen leicht durch Stoßeinwirkungen platzen können.

Auch in der Papierfabrikation können aufgrund des im Wasserkreislauf eingetragenen Luftgehaltes Schäume gebildet werden, die zu Störungen führen. Beispielsweise können Schaumflecken auf dem Papier auftreten, wenn Schaum mit flotiertem Schmutz bei der Blattbildung auf die Papierbahn gelangt. Durch die zunehmend schneller laufenden Maschinen steigt insgesamt die Gefahr der Untermischung von Luft in die Fasersuspension, was zu einer Störung des Entwässerungsvorgangs des Papierstoffs auf der Papiermaschine und letztendlich zu porösen Strukturen des Papierblattes führen kann. Diese prinzipiell bekannten Nachteile werden durch die neuen Papiermaschinen mit den geschlosseneren Wasserkreisläufen noch verstärkt, da sich schaumbildende und schaumstabilisierende Stoffe in den geschlossenen Systemen anreichern.

Wie die beiden Beispiele deutlich zeigen, besteht in der Technik ein großer Bedarf an Entschäumern, die in der Lage sein sollen, entstandenen Schaum zu verringern als auch an Schauminhibitoren, die das Entstehen von Schaum unterdrücken sollen. Des weiteren sollen Antischaummittel auch in flüssigen Systemen gelöste Luftbläschen an die Systemoberfläche treiben, ein Vorgang, der als Entgasen oder auch als Entlüften beispielsweise bei Lacken eine große Rolle spielt. Antischaummittel sind daher im Sinne der Erfindung Mittel, die sowohl entstehenden Schaum verringern und präventiv die Schaumbildung inhibieren als auch Luftbläschen austreiben sollen. Von diesen Antischaummitteln wird erwartet, daß sie in geringen Zusatzmengen kurzfristig aber auch langanhaltend wirksam sind.

Die WO-A-9 300 144 beschreibt Antischaummittel, die wachs, langkettige Fettalkohole und Fettketone mit Schmelzpunkt von 60 bis 160°C enthalten und in Dialkylether als Trägeröl dispergiert sind.

In der deutschen Offenlegungsschrift DE-A-30 39 393 wird eine wäßrige Antischaummittelzusammensetzung beschrieben, die Wasser, mindestens einen höheren aliphatischen Alkohol, mindestens eine feste Fettsäure, mindestens eine Seife einer festen Fettsäure und oberflächenakive Mittel enthält. Obgleich dieses Antischaummittel durchaus in der Papierherstellungsindustrie wirksam ist, gilt es aufgrund der gestiegenen Anforderungen durch die schneller laufenden Maschinen Antischaummittel zur Verfügung zu stellen, die eine noch größere Wirksamkeit aufweisen. Desweiteren sollten die Antischaummittel nur solche Komponenten enthalten, die toxikologisch unbedenklich und biologisch gut abbaubar sind, damit gegebenenfalls ins Abwasser gelangende Antischaummittel in der Umwelt keine Probleme verursachen. Zudem galt es Antischaummittel zu finden, die auch in geschlossenen Systemen, wie sie bei der Papierherstellung vorliegen, auch bei Temperaturen oberhalb 35 °C wirksam sind. Da zudem vom Anmelder gebrauchsfertige, leicht dosierbare Antischaummittel gewünscht werden, war es eine weitere Aufgabe der vorliegenden Erfindung, wäßrige Dispersionen von den Antischaummitteln formulieren zu können.

In der deutschen Offenlegungsschrift DE-A-25 53 990 werden Mittel zur Schaumbekämpfung in der Anstrich-, Papier- und Nahrungsmittelindustrie beschrieben, die in Form wäßriger Dispersionen verwendet werden und deren dispergierte wachsartige Phase Ketone mit Schmelzpunkten über 70°C enthalten. In den Dispersionen können noch weitere entschäumend wirkende Substanzen wie Fettalkohole enthalten sein. Eine nähere Bestimmung zu den Fettalkoholen wird nicht gegeben. Schließlich finden sich in dieser Offenlegungsschrift auch keine Beispiele von wäßrigen Dispersionen, deren dispergierte Phase Ketone und Fettalkohole enthalten. Eigene Anwendungstests haben aber gezeigt, daß nicht alle Fettalkohole zusammen mit Ketonen als wäßrige Dispersionen gute Antischaummittel ergeben. Vielmehr wurde gefunden, daß die oben aufgezählten Anforderungen nur durch Antischaummittel erfüllt werden, die Fettalkohole, Fettketone sowie gegebenenfalls natürliche und/oder synthetische Wachse mit Schmelzpunkten über 40, 45 bzw. 50 °C enthalten.

Gegenstand der vorliegenden Erfindung sind wäßrige Antischaummitteldispersionen, deren dispergierte Phase
a) Fettalkohole mit Schmelzpunkten über 40 °C und
b) Ketone mit Schmelzpunkten über 45 °C sowie gegebenenfalls
c) natürliche und/oder synthetische Wachse mit Schmelzpunkten über 50 °C
enthält.

Die Fettalkohole, die als Komponente a) in der dispergierten Phase des Antischaummittels enthalten sind, weisen Schmelzpunkte über 40 °C, vorzugsweise über 50 °C auf. Bevorzugt werden Fettalkohole, die gesättigt und gerad- und/oder verzweigtkettig sind und 16 bis 28 C-Atome haben. Beispiele für die geradzahligen Fettalkohole sind Palmityl-, Stearyl-, Arachidyl-, Behenyl-, Lignoceryl- und Cerylalkohol sowie Octacosanol-1. Die geradzahligen Fettalkohole können wie in der Fettchemie üblich auch in Form technischer Schnitte eingesetzt werden, wie sie beispielsweise gegebenenfalls nach Absättigung der ungesättigten Anteile aus erucasäurereichem Rüböl, Erdnußöl, Rindertalg oder Fischöl durch Hydrierung erhalten werden. Abgesehen von diesen Alkoholen sind im Sinne der Erfindung auch gesättigte, geradkettige Alkohole mit 16 bis 28 C-Atome geeignet, die nach dem Ziegler-Verfahren durch Oxidation von Aluminiumalkylen und anschließender Hydrolyse erhältlich sind. Auf diese Weise werden Mischungen von geradzahligen, geradkettigen Fettalkoholen (Alfole) erhalten. Auch Alkohole, die durch die Oxosynthese durch Umsetzung von Olefinen mit Kohlenmonoxid/Wasserstoff erhalten werden wie ungeradzahlige und verzweigte Alkohole, sind im Sinne der Erfindung geeignet.

Besonders bevorzugt im Sinne der Erfindung werden gesättigte, unverzweigte Fettalkohole mit 18 bis 22 C-Atomen und insbesondere Mischungen von solchen Fettalkoholen, die zwischen 10 bis 50 Gew.-% Stearylalkohol enthalten.

Als weiteren obligatorischen Bestandteil enthalten die Antischaummitteldispersionen in der dispergierten Phase Ketone mit Schmelzpunkten über 45 °C und vorzugsweise über 55 °C. Besonders geeignet sind gesättigte Ketone, die nach den einschlägigen Methoden in der organischen Chemie erhalten werden können. Zu ihrer Herstellung kann man beispielsweise von Fettsäuremagnesiumsalzen ausgehen, die bei Temperaturen oberhalb von 300 °C unter Abspaltung von Kohlendioxid und Wasser pyrolisiert werden. Geht man von Magnesiumsalzen einer Fettsäure aus, so entstehen symmetrische Ketone. Werden stattdessen Mischungen von Magnesiumsalzen unterschiedlicher Fettsäuren eingesetzt, entstehen unsymmetrische Ketone. Besonders geeignet im Sinne der Erfindung sind Ketone mit Schmelzpunkten über 55 °C der Formel (I) R¹-CO-R², wobei R¹ und R² unabhängig voneinander für einen Alkylrest mit 15 bis 27 C-Atomen stehen. Beispiele für diese Ketone sind Hentriacontanon-16 (Palmiton), Pentatriacontanon-18 (Stearon), Nonatriacontanon-20 (Arachinon) und Triatetracontanon-22 (Behenon).

Wie man den aufgezählten Beispielen entnehmen kann, sind besonders bevorzugt symmetrische Ketone der Formel (I).

Fakultativ können die wäßrigen Antischaummitteldispersionen in der dispergierten Phase natürliche und/oder synthetische Wachse enthalten. Als synthetische Wachse kommen insbesondere solche in Betracht, wie sie nach der Kohlenmonooxidhydrierung nach der Fischer-Tropsch-Synthese oder mittels Olefinpolymerisation erhältlich sind.

Natürliche Wachse sind im Sinne der Erfindung sowohl solche, die bei der Verarbeitung von Erdöl, Bitumen und/oder Fossilien erhältlich sind, beispielsweise die Paraffinwachse und Montanwachse als auch die natürlichen Ester von natürlichen C₁₆-C₃₂-Fettsäuren oder von natürlichen C₁₆-C₃₂-Fettalkoholen wie Stearylstearat, Stearylbehenat, Behenylbehenat, Carbanauwachs, Bienenwachs usw. Besonders bevorzugt im Sinne der Erfindung werden die natürlichen Wachse und insbesondere die an und für sich üblichen Paraffinwachse mit Schmelzpunkten nach DIN 51570 über 50 bis 85 °C.

Die dispergierten Phasen der wäßrigen Antischaummitteldispersionen enthalten üblicherweise 70 bis 98 Gew.-% Fettalkohole der beschriebenen Art und 2 bis 30 Gew.-% Ketone der beschriebenen Art sowie 0 bis 18 Gew.-% natürliche und/oder synthetische Wachse. Besonders bevorzugt werden solche Antischaummitteldispersionen, deren dispergierte Phase 75 bis 95 Gew.-% Fettalkohole und 2 bis 15 Gew.-% Ketone und 3 bis 15 Gew.-% natürliche und/oder synthetische Wachse enthalten.

Üblicherweise enthalten die Antischaummitteldispersionen die dispergierte Phase - bezogen auf 100 Gew.-% Antischaummitteldispersion - in Mengen von 5 bis 40 Gew.-%, vorzugsweise 10 bis 35 Gew.-%. Der zu 100 Gew.-% fehlende Rest ist Wasser sowie gegebenenfalls Dispergatoren.

Zur Herstellung der erfindungsgemäßen wäßrigen Antischaummitteldispersionen kann man die Verbindungen a) und b) sowie gegebenenfalls c) zusammen in eine homogene Schmelze überführen und diese in Wasser einrühren, wobei durch Abkühlung der Schmelze die Dispersionen entstehen. Man kann aber auch die Verbindungen a), b) und ggf. c) in ggf. erwärmtes Wasser einrühren und das Wasser auf solche Temperaturen halten, bis eine Schmelze entsteht. Um die Emulgierung bezwiehungsweise Dispergierung zu verbessern, kann man typische grenzflächenaktive Stoffe wie anionische, kationische oder nichtionische Verbindungen, vorzugsweise vor dem Abkühlen, zugeben. Üblicherweise enthalten 100 Gew.-Teile der Antischaummitteldispersionen 0,5 bis 5 Gew.-Teile an solchen als Emulgatoren wirkenden Verbindungen. Typische Emulgatoren sind die nichtionischen Ethylenoxid-Anlagerungsprodukte an Alkohole, Alkylphenole (z. B. Nonylphenol) und Fettsäuren, wobei in der Regel mindestens 5 Mol Ethylenoxid pro Mol Verbindung angelagert sind. Beispiele für anionische Emulgatoren sind Alkoholsulfate, Alkylarylsulfonate, ethoxylierte Alkoholsulfate, ethoxylierte Sulfate und ethoxylierte Sulfonate von Alkylphenolen, Sulfonate von ggf. kondensiertem Naphthalin, Alkalisalze der Sulfosuccinate und Alkaliphosphatester.

Falls gewünscht kann man den erfindungsgemäßen wäßrigen Antischaummitteldispersionen übliche Zusatzstoffe wie Schutzkolloide und Stabilisatoren zugeben oder auch flüssige Fettalkohole, Fettsäuren, Fette, Öle und Siliconöle, um die Konsistenz der dispergierten Phase zu verbessern, ohne die Wirkung zu beeinträchtigen.

Die erfindungsgemäßen wäßrigen Antischaummitteldispersionen sind gut praktisch einsetzbar und können gut dosiert werden. Sie zeigen auch bei höheren Temperaturen und besonders hartnäckigen Schäumen, wie er in der Papierindustrie auftritt, hervorragende schaumunterdrückende bzw. schaumregulierende Wirkungen. Die gute Wirksamkeit bei den höheren Temperaturen ist unter anderem auch auf die abgestimmtem Schmelzpunkte der Ketone und Fettalkohole der Antischaummitteldispersionen zurückzuführen. Des weiteren ist bemerkenswert, daß der geringe Zusatz an Ketonen, die Wirksamkeit der Fettalkohole deutlich steigert.

Ein weiterer Gegenstand der vorliegenden Erfindung betrifft die Verwendung von Mischungen enthaltend
a) Fettalkohole mit Schmelzpunkten über 40 °C und
b) Ketone mit Schmelzpunkten über 45 °C sowie gegebenenfalls
c) natürliche und/oder synthetische Wachse mit Schmelzpunkten über 50 °C
in Form wäßriger Dispersionen als Antischaummittel. In der Regel werden dabei die Mischungen zu den schaumbildenden wäßrigen Systemen in einer solchen Menge in Form wäßriger Dispersionen zugesetzt, daß auf 100 Gew.-Teile eines schaumbildenden wäßrigen Mediums etwa 0,001 bis 0,1 Gew.-Teile der Feststoffmischung zugegeben werden. Bei der Angabe an Zugabemenge bezieht man sich auf die feste Mischung Keton, Fettalkohol und ggf. Wachse und nicht auf die wäßrige Dispersion. Insbesondere geeignet sind die Mischungen als wäßrige Antischaummitteldispersionen in der Papierindustrie, wo sie in allen wäßrigen Systemen einsetzbar sind. Besonders bevorzugt werden die Mischungen in Form wäßriger Dispersionen als Antischaummittel in der Papierindustrie in wäßrigen Systemen verwendet, deren Temperaturen mindestens 35 °C beträgt, beispielsweise bei der Sulfitzellstoffkochung als auch bei der Papierbeschichtung. Bei der Papierherstellung können sie bei der Mahlung und Dispergierung von Papierstoffen und Pigmenten verwendet werden. Selbstverständlich ist es aber auch möglich, die Mischungen in Form ihrer wäßrigen Dispersionen auch überall dort einzustellen, wo Schäume auftreten bzw. verhindert werden sollen, so in der Nahrungsmittelindustrie, der Stärkeindustrie, in Kläranlagen als auch in Lacken und Farben.

Aufgrund des besonderen Verwendungszweckes ist ein weiterer Gegenstand der vorliegenden Erfindung ein Verfahren zum Entschäumen von wäßrigen Systemen in der Papierindustrie, dadurch gekennzeichnet, daß den wäßrigen Systemen Mischungen enthaltend
a) Fettalkohole mit Schmelzpunkten über 40 °C und
b) Ketone mit Schmelzpunkten über 45 °C sowie gegebenenfalls
c) natürliche und/oder synthetische Wachse mit Schmelzpunkten über 50 °C
in Form wäßriger Dispersionen zugesetzt werden.

### Beispiele

### A) Herstellung der erfindungsgemäßen wäßrigen Antischaummitteldispersionen

### Beispiel A1)

713 g entionisiertes Wasser wurden unter Rühren auf 80 °C aufgewärmt. Hierzu wurden nacheinander unter langsamen Rühren je 6 g von einem Additionsprodukt von 14 Mol Ethylenoxid an technischer Ölsäure und von einem Additionsprodukt von 5,5 Mol Ethylenoxid an Tallölfettsäure als Emulgatoren zugegeben. Anschließend rührte man nacheinander 162,0 g eines technischen C₁₈₋₂₂-Fettalkoholgemisches (Zusammensetzung des Alkohols in Gew.-%: 2 bis 4 C₁₆; 15 bis 20 C₁₈; 35 bis 45 C₂₀; 23 bis 45 C₂₂ und 1 bis 2 C₂₄; Hydroxylzahl OHZ nach DIN 53240 = 180 bis 185 und Jodzahl JZ nach DGF CV, 11b = 2) und 18,0 g Stearon. Die gesamte Reaktionsmischung wurde auf 80 °C aufgewärmt und solange gerührt, bis alle Bestandteile gelöst waren und man eine Emulsion erhielt. Anschließend ließ man die Reaktionsmischung schnell abkühlen, wobei sich die Dispersion ausbildete.

### Beispiel A2)

Analog Beispiel A1) wurden zu 713 g entionisiertes Wasser je 6 g von den in Beispiel A1) beschriebenen Additionsprodukten als Emulgatoren zugegeben sowie 162 g eines Rübölfettalkohols (Zusammensetzung in Gew.-%: 4 C₁₆; 34 C₁₈; 7 C₂₀; 55 C₂₂) und 18 g Stearon.

### Beispiel A3)

Analog Beispiel A1) wurden zu 307,2 g entionisiertem Wasser 2,4 g der in Beispiel A1) beschriebenen Emulgatoren zugegeben. Anschließend rührte man nacheinander 79,2 g des in Beispiel A1) beschriebenen technischen C₁₈₋₂₂-Fettalkoholgemisches und 8,8 g Stearon ein.

### Vergleichsbeispiele

### Vergleich V1)

Analog Beispiel A1) wurden zu 713 g entionisiertem Wasser je 6 g der in Beispiel A1) beschriebenen Emulgatoren und 180 g des in Beispiel A1) beschriebenen technischen C₁₈₋₂₂-Fettalkoholgemisches gegeben. Es wurde kein Keton zugefügt.

### Vergleich V2)

Analog Beispiel A2) wurden zu 713 g entionisiertem Wasser je 6 g der in Beispiel A1) beschriebenen Emulgatoren sowie 180 g des in Beispiel A2) beschriebenen Rübölfettalkohols gegeben. Ketone wurden nicht zugefügt.

### Vergleich V3)

Analog Beispiel A3) wurden zu 307,2 g entionisiertem Wasser je 2,4 g der in Beispiel A1) beschriebenen Emulgatoren und 88 g des in Beispiel A1) beschriebenen technischen C₁₈₋₂₂-Fettalkoholgemisches. Es wurde kein Keton zugefügt.

### Vergleich V4)

In Anlehnung an Beispiel A1) wurden zu 307,2 g entionisiertem Wasser je 2,4 g der in Beispiel A1) beschriebenen Emulgatoren sowie 79,2 g eines C₁₄-Fettalkohols mit einem Schmelzbereich von 33 bis 37 °C und 8,8 g Stearon zugegeben.

### Vergleich V5)

Analog Vergleichsbeispiel V4), jedoch mit 88 g des technischen Fettalkoholgemisches und ohne Stearon.

### B) Anwendung

Die Antischaummitteldispersionen A1), A2) sowie Vergleich V1) und Vergleich V2) wurden in Mengen von 200 µl zu 1 l 7,5 gew.%ige Calciumligninsulfonat-Lösung gegeben, die auf 45 oder 55 °C erwärmt worden war. Die Lösung wurde in einer Glasfrittenapparatur laufend mit 1000 upm gerührt, dabei wurden 400 l Luft pro Stunde eingetragen. Bestimmt wurde die Zeit (in Sekunden), nach dem die Lösung zusammen mit entstandenem Schaum ein Volumen von 4,5 Liter einnahm. Die Antischaummitteldispersion ist um so wirkungsvoller, je gößer die notwendige Zeitspanne ist, bis das Gesamtvolumen erreicht ist.

Die Antischaummitteldispersion A3) sowie die anderen Vergleichsdispersionen wurden in Anlehnung an obiges Verfahren getestet. Jedoch wurden 150 µl an Dispersion zugegeben, es wurden 600 l Luft pro Stunde eingetragen und bei Temperaturen von 40 und 60 °C gearbeitet, bis ein Gesamtvolumen von Lösung und Schaum von 5 Litern erreicht war. In der folgenden Zusammenstellung sind die Versuchsergebnisse wiedergegeben.

| Beispiele | 4,5 l Schaumvolumen in sec | |
|---|---|---|
| | 45 °C | 55 °C |
| A 1) | 500 | 167 |
| A 2) | 367 | 152 |
| V 1) | 307 | 100 |
| V 2) | 288 | 85 |

| Beispiele | 5 l Schaumvolumen in sec | |
|---|---|---|
| | 40 °C | 60 °C |
| A 3) | 220 | 55 |
| V 3) | 110 | 35 |
| V 4) | 55 | 45 |
| V 5) | 50 | 25 |

Die obige Zusammenstellung zeigt zum einen, daß die Kombinationen von Fettalkohol und Keton in den wäßrigen Dispersionen besser sind, als die reinen Fettalkohole in der Dispersion (siehe Beispiel A1), A2) im Vergleich zu Vergleichsbeispiel V1) und V2)). Des weiteren zeigt sich, daß wäßrige Dispersionen mit kürzerkettigeren Fettalkoholen und mit niedrigeren Schmelzpunkten zusammen mit Ketonen (V4) deutlich schlechter in der entschäumenden Wirkung sind als Beispiel A3.

## Patentansprüche

1. Wäßrige Antischaummitteldispersionen, deren dispergierte Phase
a) Fettalkohole mit Schmelzpunkten über 40 °C und
b) Ketone mit Schmelzpunkten über 45 °C sowie gegebenenfalls
c) natürliche und/oder synthetische Wachse mit Schmelzpunkten über 50 °C
enthält.

2. Wäßrige Antischaummitteldispersionen nach Anspruch 1, dadurch gekennzeichnet, daß deren dispergierte Phase Fettalkohole mit Schmelzpunkten über 50 °C, vorzugsweise aus der Gruppe der gesättigten gerad-und/oder verzweigtkettigen Fettalkohole mit 16 bis 28 C-Atome, enthält.

3. Wäßrige Antischaummitteldispersionen nach Anspruch 1, dadurch gekennzeichnet, daß deren dispergierte Phase Ketone mit Schmelzpunkten über 55 °C enthält.

4. Wäßrige Antischaummitteldispersionen nach Anspruch 3, dadurch gekennzeichnet, daß deren dispergierte Phase Fettketone der Formel (I) R¹-CO-R² enthält, wobei R¹ und R² unabhängig voneinander für einen Alkylrest mit 15 bis 27 C-Atomen stehen.

5. Wäßrige Antischaummitteldispersionen nach Anspruch 1, dadurch gekennzeichnet, daß deren dispergierte Phase natürliche Wachse, vorzugsweise Paraffinwachse mit Schmelzpunkten über 50 °C bis 85 °C enthält.

6. Wäßrige Antischaummitteldispersionen nach Anspruch 1, dadurch gekennzeichnet, daß deren dispergierte Phase
70 bis 98 Gew.-% Fettalkohole und
2 bis 30 Gew.-% Ketone sowie
0 bis 18 Gew.-% natürliche und/oder synthetische Wachse
enthält.

7. Wäßrige Antischaummitteldispersionen nach Anspruch 6, dadurch gekennzeichnet, daß deren dispergierte Phase
75 bis 95 Gew.-% Fettalkohole und
2 bis 15 Gew.-% Ketone und
3 bis 15 Gew.-% natürliche und/oder synthetische Wachse
enthält.

8. Wäßrige Antischaummitteldispersionen nach Anspruch 1, dadurch gekennzeichnet, daß sie 5 bis 40 Gew.-% an dispergierter Phase enthalten.

9. Verwendung von Mischungen enthaltend
a) Fettalkohole mit Schmelzpunkten über 40 °C und
b) Ketone mit Schmelzpunkten über 45 °C sowie gegebenenfalls
c) natürliche und/oder synthetische Wachse mit Schmelzpunkten über 50 °C
in Form wäßriger Dispersionen als Antischaummittel.

10. Verwendung nach Anspruch 9, dadurch gekennzeichnet, daß die wäßrigen Dispersionen der Mischungen als Antischaummittel in der Papierindustrie in wäßrigen Systemen verwendet werden, deren Temperaturen mindestens 35 °C betragen.

11. Verfahren zum Entschäumen von wäßrigen Systemen in der Papierindustrie, dadurch gekennzeichnet, daß den wäßrigen Systemen Mischungen enthaltend
a) Fettalkohole mit Schmelzpunkten über 40 °C und
b) Ketone mit Schmelzpunkten über 45 °C sowie gegebenenfalls
c) natürliche und/oder synthetische Wachse mit Schmelzpunkten über 50 °C
in Form wäßriger Dispersionen zugesetzt werden.

## Claims

1. Aqueous dispersions of antifoam agents of which the dispersed phase contains
a) fatty alcohols with melting points above 40°C and
b) ketones with melting points above 45°C and, optionally,
c) natural and/or synthetic waxes with melting points above 50°C.

2. Aqueous dispersions as claimed in claim 1, characterized in that their dispersed phase contains fatty alcohols with melting points above 50°C preferably selected from the group of saturated, linear and/or branched fatty alcohols containing 16 to 28 carbon atoms.

3. Aqueous dispersions as claimed in claim 1, characterized in that their dispersed phase contains ketones with melting points above 55°C.

4. Aqueous dispersions as claimed in claim 3, characterized in that their dispersed phase contains fatty ketones corresponding to formula (I) R¹-CO-R², where R¹ and R² independently of one another represent an alkyl radical containing 15 to 27 carbon atoms.

5. Aqueous dispersions as claimed in claim 1, characterized in that their dispersed phase contains natural waxes, preferably paraffin waxes with melting points above 50°C to 85°C.

6. Aqueous dispersions as claimed in claim 1, characterized in that their dispersed phase contains
70 to 98% by weight of fatty alcohols,
2 to 30% by weight of ketones and
0 to 18% by weight of natural and/or synthetic waxes.

7. Aqueous dispersions as claimed in claim 6, characterized in that their dispersed phase contains
75 to 95% by weight of fatty alcohols,
2 to 15% by weight of ketones and
3 to 15% by weight of natural and/or synthetic waxes.

8. Aqueous dispersions as claimed in claim 1, characterized in that they contain 5 to 40% by weight of dispersed phase.

9. The use of mixtures containing
a) fatty alcohols with melting points above 40°C and
b) ketones with melting points above 45°C and, optionally,
c) natural and/or synthetic waxes with melting points above 50°C
in the form of aqueous dispersions as antifoam agents.

10. The use claimed in claim 9, characterized in that the aqueous dispersions of the mixtures are used as antifoam agents in the paper industry in aqueous systems with temperatures of at least 35°C.

11. A process for defoaming aqueous systems in the paper industry, characterized in that mixtures containing
a) fatty alcohols with melting points above 40°C and
b) ketones with melting points above 45°C and, optionally,
c) natural and/or synthetic waxes with melting points above 50°C
in the form of aqueous dispersions are added to the aqueous systems.

## Revendications

1. Dispersions aqueuses d'agents antimousse, dont la phase dispersée contient
a) des alcools gras possédant des points de fusion supérieurs à 40°C et
b) des cétones possédant des points de fusion supérieurs à 45°C, ainsi que, le cas échéant,
c) des cires naturelles et/ou synthétiques possédant des points de fusion supérieurs à 50°C.

2. Dispersions aqueuses d'agents antimousse selon la revendication 1, caractérisées en ce que leur phase dispersée contient des alcools gras possédant des points de fusion supérieurs à 50°C, de préférence choisis parmi le groupe des alcools gras saturés à chaînes droites et/ou ramifiées contenant de 16 à 28 atomes de carbone.

3. Dispersions aqueuses d'agents antimousse selon la revendication 1, caractérisées en ce que leur phase dispersée contient des cétones possédant des points de fusion supérieurs à 55°C.

4. Dispersions aqueuses d'agents antimousse selon la revendication 3, caractérisées en ce que leur phase dispersée contient des cétones grasses de formule (I) R¹-CO-R² où R¹ et R² représentent, indépendamment l'un de l'autre, un radical alkyle contenant de 15 à 27 atomes de carbone.

5. Dispersions aqueuses d'agents antimousse selon la revendication 1, caractérisées en ce que leur phase dispersée contient des cires naturelles, de préférence des cires de paraffines possédant des points de fusion de plus de 50°C à 85°C.

6. Dispersions aqueuses d'agents antimousse selon la revendication 1, caractérisées en ce que leur phase dispersée contient
des alcools gras à concurrence de 70 à 98% en poids,
des cétones à concurrence de 2 à 30% en poids, ainsi que
des cires naturelles ou synthétiques à concurrence de 0 à 18% en poids.

7. Dispersions aqueuses d'agents antimousse selon la revendication 6, caractérisées en ce que leur phase dispersée contient
des alcools gras à concurrence de 75 à 95% en poids,
des cétones à concurrence de 2 à 15% en poids, et
des cires naturelles ou synthétiques à concurrence de 3 à 15% en poids.

8. Dispersions aqueuses d'agents antimousse selon la revendication 1, caractérisées en ce qu'elles contiennent de 5 à 40% en poids de phase dispersée.

9. Utilisation de mélanges contenant
a) des alcools gras possédant des points de fusion supérieurs à 40°C et
b) des cétones possédant des points de fusion supérieurs à 45°C, ainsi que, le cas échéant,
c) des cires naturelles et/ou synthétiques possédant des points de fusion supérieurs à 50°C,
sous forme de dispersions aqueuses comme agents antimousse.

10. Utilisation selon la revendication 9, caractérisée en ce qu'on utilise les dispersions aqueuses des mélanges comme agents antimousse dans l'industrie de fabrication du papier dans des systèmes aqueux dont les températures s'élèvent à au moins 35°C.

11. Procédé d'écumage de systèmes aqueux dans l'industrie de fabrication du papier, caractérisé en ce que l'on ajoute aux systèmes aqueux des mélanges contenant
a) des alcools gras possédant des points de fusion supérieurs à 40°C et
b) des cétones possédant des points de fusion supérieurs à 45°C, ainsi que, le cas échéant,
c) des cires naturelles et/ou synthétiques possédant des points de fusion supérieurs à 50°C,
sous forme de dispersions aqueuses.
